# EUROPEAN PATENT SPECIFICATION

(11) **EP 1 493 543 B1**
(45) Date of publication and mention of the grant of the patent: **20.04.2011**
(21) Application number: 04468010.6
(22) Date of filing: 30.06.2004
(51) Int. Cl.: B27N 9/00, C09K 21/02, E04C 2/02, B32B 5/22, B32B 33/00

(54) **Method for manufacturing of non-combustible panels and non-combustible panels obtained thereby**
Verfahren zur Herstellung von nichtbrennbaren Paneelen und nach diesem Verfahren erhaltene nichtbrennbare Paneele
Procédé pour la fabrication de panneaux non-combustibles et panneaux non-combustibles obtenus par ce procédé

(30) Priority: 03.07.2003 SI 200300165
(43) Date of publication of application: 05.01.2005
(73) Proprietor: Novolit, 1385 Nova vas (SI)
(72) Inventor: Marolt, Boris, 1385 Nova vas na Blokah (SI)
(74) Representative: Kraljic, Janez

(56) References cited:
- DE-A1- 3 206 218
- DE-A1- 10 006 041

## Description

The invention relates to the method for manufacturing non-combustible sandwich panels and to non-combustible sandwich panels manufactured according to this method.

Under the notion sandwich panel, in this description, a construction element consisting of various layers, being used for thermal and/or sound insulation is to be understood.

A sandwich panel consists of at least one core layer and at least one coverboard layer.

The core layer consists of insulative material, preferentially of mineral wool, glass wool, various expanded fills, EPS boards, XPS boards, resol boards, polyurethane, cork, wood-wool, or other construction materials which are suitable for construction uses e.g. plaster boards.

The coverboard layer gives the sandwich panel the required strength, needed to be used in accordance with its purpose for which it had been made for. Coverboard layers are usually made of various production materials, preferentially of wood-wool. For the manufacturing method other material can also be used e.g. organic-based foams, wood particles, sawdust, or other natural insulative materials like flax, hemp or coconut fibres. In the manufacturing method the production material is mixed with binding agents, and compressed to form panels of various thickness. The core layer and coverboard layers are glued in the production line, or later on.

In accordance with the standard EN 13501 - 1 these materials are divided into classes according to their resistivity to inflame or burn:
- A1, A2 -: non-combustible materials;
- B, C -: hardly inflammable materials;
- D, E -: normally inflammable materials;
- F: - easily inflammable materials.

A sandwich panel where at least one board is made, according to the known methods, of production material like wood-wool, organic foam, or other natural insulative materials like sawdust, flax, hemp, or coconut fibres, is classified as hardly inflammable material and thus relates to class B which is, of course, a considerable faultiness of this construction material.

The subject of the invention is such method for manufacturing of non-combustible sandwich panels where the non-inflammable sandwich panel is, relating to the standard EN 13501 - 1, classified as non-inflammable material relating to the class A2.

For achieving a proper level of non-combustibility, the originally manufactured production material, preferentially wood-wool, is treated with agents for lowering the level of inflammability and combustibility.

In the published patent application DE 100 06 041 A1 the method is described, according to which a non-combustible one-layer panel board is made of wood-wool, and classified as class A2 according to its resistivity to inflame or burn. In accordance with the method laid down in the application DE 100 06 041 A1, wood-wool is treated with ammonium phosphate, ammonium polyphosphate, sodium triphosphate, hexametaphosphate, dipentaerythritol, or mixture of these components.

The published patent application DE 32 06 218 A1 describes a non-combustible building panel and a process for its manufacture, in which covering layers consisting of wood chips or wood fibres vacuum-impregnated with a fire-protection agent in the form of phosphate salts and/or boron salts, and of a binder, are pressed with application of pressure and heat and thus compressed with the central layer.

The present invention provides a method as defined in claim 1 and a non-combustible sandwich panel as defined in claim 11.

The method for manufacturing non-combustible sandwich panels according to the present invention is based on using the non-combustible material for manufacturing of the core layer of non-combustible sandwich panel, and adding up an additional method step in manufacturing a coverboard layer of non-combustible sandwich panel where the production material is treated/saturated with agents for lowering the level of inflammability and combustibility.

In contrast to the patent application DE 100 06 041 the agent by which, in the method step of manufacturing a coverboard layer, the production material is treated or saturated with for the purpose of lowering the level of inflammability in combustibility, according to the present invention, and in the method of manufacturing a non-combustible sandwich panel, is an emulsion consisting of aluminium silicate, aluminium hydroxide and silica (SiO₂) in various mixtures and mixing ratios. Among the said agents the most important one is aluminium silicate, as it can be used for this purpose almost without any other additives, however, excellent results show in mixtures where particular components are represented in portions from 5% to 90 % of total mass. Especially suitable is the mixture where said components are mixed together in ratio 1:1:1, and mixtures containing aluminium silicate, aluminium hydroxide and silica (SiO₂) in ratio 2:1:1.

The time of treatment or saturation of production material with agents for lowering the level of inflammability and combustibility depends on the viscidity of the said agent, and it stretches over the interval from 5 seconds to 5 minutes.

The viscidity of the agent for lowering the level of inflammability and combustibility is rather important, as it influences the penetration of the agent into the production material. The most suitable viscidity of the said agent ranges from 5 to 30 seconds, measured in accordance with DIN 4 cup.

At this step of the method, the humidity of the production material also plays an important role for the penetration of the agent for lowering the level of inflammability and combustibility into the production material, and has to amount to 5% - 50%.

After the production material for the production of coverboard layers has been saturated, preferentially without drying, it is mixed with particular binding material. In order to achieve lower level of inflammability and combustibility a suitable non-combustible binding agent has to be selected, or this is done by adding suitable additives to combustible binding agent. A suitable binding agent and, for this purpose, a suitable non-organic binder is cement. When using organic binders e.g. melamine, resol and various polymeric systems, the level of inflammability and combustibility has to be lowered by suitable additives. As useful additives for lowering the level of inflammability and combustibility, the relevant ones are aluminium hydroxide, phosphates, sulphates, or other agents for lowering the level of inflammability and combustibility.

The production material saturated with agents for lowering the level of inflammability and combustibility is after being mixed with binding material compressed to form coverboard layers of thickness 5 - 200 mm.

A non-combustible sandwich panel thus consists of manufactured coverboard layer made of wood-wool, organic foam, wood particles, sawdust or other natural insulative materials like flax, hemp or coconut fibres in thickness of 5 - 20 mm, and the core layer in thickness of 2 - 200 mm made of non-combustible insulative fill, preferentially of mineral wool. Preferentially, the other side of the core layer of non-combustible sandwich panel is also covered with a coverboard layer in thickness of 5 to 20 mm, made according to this method.

A sandwich panel made in this way fulfils the classification requirements for non-combustible construction materials, relating to the class A2.

## Claims

1. Method for manufacturing non-combustible sandwich panels, wherein
- a non-combustible insulative material is chosen for making of the core layer;
- making of a coverboard layer includes method steps where the production material, in most cases wood-wool, is previously saturated with the solution for lowering the level of inflammability and combustibility;
- the saturated production material for manufacturing of coverboards layer without drying is mixed with the binding material and compressed,
- the core layer and the coverboard layer are glued,
wherein the said agent for lowering the level of inflammability and combustibility of production material, mostly wood-wool, is an emulsion of aluminium silicate, aluminium hydroxide and silica (SiO₂).

2. Method according to the claim 1, **characterized in that** the said emulsion contains each of the following components - aluminium silicate, aluminium hydroxide and silica in portions from 5% up to 90% of total mass.

3. Method according to the claim 2, **characterized in that** the said emulsion contains aluminium silicate, aluminium hydroxide and silica in ratio 1:1:1.

4. Method according to the claim 2, **characterized in that** the said emulsion contains aluminium silicate, aluminium hydroxide and silica in ratio 2:1:1.

5. Method according to the claims 1 , **characterized in that** the said emulsion is a suspension of aluminium silicate.

6. Method according to any of the previous claims, **characterized in that** in the method step of manufacturing coverboard layers the production material, preferentially wood-wool, is previously treated with agent for lowering the level of inflammability and combustibility for 5 seconds up to 5 minutes.

7. Method according to any of the previous claims, **characterized in that** the viscidity of the agent for lowering the level of inflammability and combustibility ranges from 5 up to 30, according to the provisions of DIN 4 cup.

8. Method according to any of the previous claims, **characterized in that** the humidity of the production material for manufacturing of coverboard layers ranges from 5% up to 50%.

9. Method according to any of the previous claims, **characterized in that** a non-organic binding material such as cement is used.

10. Method according to one of the claims from 1 to 8, **characterized in that** an organic binding material such as melamine, resol, various polymeric systems, to which aluminium hydroxide, phosphates, sulphates or other agents for lowering the level of inflammability and combustibility are added, is used.

11. Non-combustible sandwich panel manufactured according to any of the claims from 1 to 10.

12. Non-combustible sandwich panel in accordance with the claim 11, **characterized in that** it consists of two non-combustible coverboard layers in thickness of 5 - 20 mm, and the core layer made of mineral wool in thickness of 5 up to 200 mm.

## Patentansprüche

1. Verfahren zum Herstellen von nichtbrennbaren Sandwichplatten, wobei
• für die Herstellung von Kemlage das nichtbrennbare Isoliermaterial gewählt wird;
• die Herstellung von Deckplatte Verfahrensschritte umfasst, wo das Produktionsmaterial, zumeist ist das Holzwolle, vorher mit der Lösung zum Reduzieren von Entzündbarkeit und Brennbarkeit durchgetränkt wird;
• das getränkte Produktionsmaterial zur Herstellung von Deckplatte ohne Trocken mit dem Bindemittel gemischt und komprimiert wird,
wobei die Kernlage und die Deckplatte verklebt sind, das genannte Mittel zum Reduzieren von Entzündbarkeit und Brennbarkeit des Produktionsmaterials, zumeist ist das Holzwolle, ist eine Emulsion aus Aluminiumsilicat, Aluminiumhydroxid und Siliciumdioxid (SiO₂).

2. Verfahren nach Anspruch 1, **dadurch gekennzeichnet, dass** die Emulsion jeden von den folgenden Bestandteilen enthält - Aluminiumsilicat, Aluminiumhydroxid und Siliciumdioxid im Anteil 5% bis 90 % der Gesamtmasse.

3. Verfahren nach Anspruch 2, **dadurch gekennzeichnet, dass** die Emulsion Aluminiumsilicat, Aluminiumhydroxid und Siliciumdioxid im Verhältnis 1:1:1 enthält.

4. Verfahren nach Anspruch 2, **dadurch gekennzeichnet, dass** die Emulsion Aluminiumsilicat, Aluminiumhydroxid und Siliciumdioxid im Verhältnis 2:1:1 enthält.

5. Verfahren nach Anspruch 1, **dadurch gekennzeichnet, dass** die Emulsion eine Suspension aus Aluminiumsilicat ist.

6. Verfahren nach einem der vorangehenden Ansprüche, **dadurch gekennzeichnet, dass** im Verfahrensschritt zur Herstellung von Deckplatten das Produktionsmaterial, zumeist ist das Holzwolle, vorher 5 Sekunden bis 5 Minuten mit dem Mittel zum Reduzieren von Entzündbarkeit und Brennbarkeit bearbeitet wird.

7. Verfahren nach einem der vorangehenden Ansprüche, **dadurch gekennzeichnet, dass** sich die Dickflüssigkeit des Mittels zum Reduzieren von Entzündbarkeit und Brennbarkeit von 5 bis 30 gemäß den Bestimmungen DIN 4 cup bewegt.

8. Verfahren nach einem der vorangehenden Ansprüche, **dadurch gekennzeichnet, dass** die Feuchtigkeit des Produktionsmaterials zur Herstellung von Deckplatten 5% bis 50% beträgt.

9. Verfahren nach einem der vorangehenden Ansprüche, **dadurch gekennzeichnet, dass** ein nichtorganisches Bindematerial wie Zement verwendet wird.

10. Verfahren nach einem der Ansprüche 1 bis 8, **dadurch gekennzeichnet, dass** ein organisches Bindematerial wie Melamin, Resol, verschiedene Polymersysteme zu denen Aluminiumhydroxide, Phosphate, Sulfate oder andere Mittel zum Reduzieren von Entzündbarkeit und Brennbarkeit beigemischt sind, verwendet wird.

11. Nichtbrennbare Sandwichplatte hergestellt nach einem der Ansprüche 1 bis 10.

12. Nichtbrennbare Sandwichplatte gemäß dem Anspruch 11, **dadurch gekennzeichnet, dass** die zwei nichtbrennbaren Deckplatten mit der Dicke von 5 - 20 mm und eine Kemlage aus Mineralwolle mit der Dicke von 5 bis 200 mm aufweist.

## Revendications

1. Procédé de fabrication d'un panneau-sandwiche résistant au feu, où
- un matériau isolant résistant au feu déstiné à former une couche de noyau est choisi;
- la fabrication d'une plaque de recouvrement comporte les étapes méthodiques où le matériau de fabrication, notammment la laine de bois, est préalablement saturé avec la solution pour la réduction du niveau d'inflammabilité et combustibilité;
- le matériau de fabrication saturé destiné à fabrquer des plaques de recouvrement sans séchage est mélangé avec le matériau connectif, où ledit agent pour la réduction du niveau d'inflammabilité et combustibilité du matériau de fabrication, notamment la laine de bois, est une émulsion de silicate d'aluminium, d'hydroxyde d'aluminium et de la silice (SiO₂).

2. Procédé selon la revendication 1, **caractérisé en ce que** ladite émulsion comporte chacun des composants suivants - le silicate d'aluminium, l'hydroxyde d'aluminium et la silice en teneur de 5% à 90% de poids totale.

3. Procédé selon la revendication 2, **caractérisé en ce que** ladite émulsion comporte le silicate d'aluminium, l'hydroxyde d'aluminium et la silice dans une proportion 1 : 1 : 1.

4. Procédé selon la revendication 2, **caractérisé en ce que** a ladite émulsion comporte le silicate d'aluminium, l'hydroxide d'aluminium et la silice dans une proportion 2 : 1 : 1.

5. Procédé selon la revendication 1, **caractérisé en ce que** ladite émulsion est une suspension du silicate d'aluminium.

6. Procédé selon l'une quelconque des revendicatons précédentes, **caractérisé en ce que** dans l'étape méthodique de fabrication des plaques de recouvrement le matériau de fabrication, notamment la laine de bois, est préalablement traité avec un agent pour la réduction du niveau d'inflammabilité et combustibilité pendant 5 secondes à 5 minutes.

7. Procédé selon l'une quelconque des revendications précédentes, **caractérisé en ce que** la viscosité de l'agent pour la réduction du niveau d'inflammabilité et combustibilité est entre 5 à 30, conformément aux dispositions de DIN 4 cup.

8. Procédeé selon l'une quelconque des revendications précédentes, **caracterisé en ce que** l'humidité du matériau de fabrication pour la fabrication des plaques de recouvrement est entre 5% à 50%.

9. Procédé selon l'une quelconque des revendications précédentes, **caractérisé en ce qu'**un matériau connectif inorganique, tel que le ciment, est utilisé.

10. Procédé selon l'une des evendications 1 à 9, **caractérisé en ce qu'**un matériau connectif organique, tel que le mélamine, le résole, des divers systemes polymériques, auquels on ajoute l'hydroxyde d'aluminium, les phosphates, les sulfates ou un autre agent pour la réduction du niveau d'inflammabilité et combustibilité, est utilisé.

11. Un panneau-sandwiche résistant au feu, fabriqué selon l'une quelconque des revendications 1 à 10.

12. Un panneau-sandwiche résistant au feu selon la revendication 12, **caractérisé en ce qu'**il comporte deux plaques de recouvrement résistantes au feu de 5 à 20 mm d'épaisseur et une couche de noyau de laine minérale d'épaisseur 5 à 200 mm.
